(19) **Europäisches Patentamt / European Patent Office / Office européen des brevets**

(11) **EP 2 023 265 A1**

(12) **EUROPÄISCHE PATENTANMELDUNG**

(43) Veröffentlichungstag:
**11.02.2009 Patentblatt 2009/07**

(51) Int Cl.:
***G06K 9/00*** *(2006.01)*

(21) Anmeldenummer: **07014924.0**

(22) Anmeldetag: **30.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Delphi Technologies, Inc.**
**Troy, Michigan 48007 (US)**

(72) Erfinder:
• **Müller-Schneiders, Stefan**
 **40597 Düsseldorf (DE)**
• **Nunn, Christian**
 **42499 Hückeswagen (DE)**
• **Meuter, Mirko**
 **42781 Gruiten (DE)**

(74) Vertreter: **Manitz, Finsterwald & Partner GbR**
**Postfach 31 02 20**
**80102 München (DE)**

(54) **Verfahren für eine Erkennung eines Gegenstandes**

(57)    Die Erfindung betrifft ein Verfahren zur Vorhersage der zu erwartenden Größe der Abbildung eines einer Fahrbahn zugeordneten unbewegten Gegenstandes in einem Bild der Umgebung im Sichtbereich einer insbesondere an einem Kraftfahrzeug angeordneten Kameraeinrichtung, die eine Bildelemente umfassende Bildebene aufweist, bei dem zumindest ein relevanter Raumbereich aus dem Sichtbereich der Kameraeinrichtung bestimmt wird, Begrenzungen der berechneten Projektion des zumindest einen relevanten Raumbereichs auf die Bildebene bestimmt werden, um wenigstens einen relevanten Bildbereich zu bestimmen, für ein jedes der Bildelemente in dem wenigstens einen relevanten Bildbereich ein Richtungsstrahl bestimmt wird, der diejenigen Raumpunkte aus dem Sichtbereich umfasst, welche bei einer Projektion auf die Bildebene auf das jeweilige Bildelement projiziert würden, und für ein jedes der Bildelemente in dem relevanten Bildbereich zumindest ein Wert für die zu erwartende Größe der Abbildung eines Verkehrszeichens bei dem jeweiligen Bildelement bestimmt wird.

Fig. 4

EP 2 023 265 A1

**Beschreibung**

Die vorliegende Erfindung betrifft ein Verfahren zur Vorhersage der zu erwartenden Größe der Abbildung eines einer Fahrbahn zugeordneten unbewegten Gegenstandes, insbesondere Verkehrszeichens, in einem Bild der Umgebung im Sichtbereich einer insbesondere an einem Kraftfahrzeug angeordneten Kameraeinrichtung, die eine Bildelemente umfassende Bildebene aufweist.

Systeme zur Verkehrszeichenerkennung können dazu verwendet werden, den Fahrer eines Kraftfahrzeugs über die Verkehrszeichen an der Fahrbahn zu informieren, beispielsweise durch Projektion einer graphischen Repräsentation eines an der Fahrbahn detektierten Verkehrszeichens über ein Head-up Display auf die Frontscheibe des Kraftfahrzeugs. Systeme zur Verkehrszeichenerkennung können jedoch auch als Fahrerassistenzsysteme verwendet werden, beispielsweise um bei einer Geschwindigkeitsübertretung die Fahrgeschwindigkeit automatisch auf die zulässige Höchstgeschwindigkeit zu reduzieren.

Für die Verkehrszeichenerkennung werden Kameras eingesetzt, die die Umgebung vor dem Kraftfahrzeug aufnehmen und auf das Vorhandensein von Verkehrszeichen hin untersuchen. Eine Verkehrszeichenerkennung kann beispielsweise zweistufig durchgeführt werden. In einer ersten Stufe (Detektion) geht es dann darum, über eine Merkmalsextraktion potentielle Kandidaten für Abbildungen von Verkehrszeichen in einem aufgenommenen Bild aufzufinden. Dies kann beispielsweise mittels einer Hough-Transformation, welche der Erkennung von geometrischen Formen dient, oder mittels einer Farbsegmentierung, bei der zusammenhängende Flächen gleicher Farbe erkannt werden, erfolgen. Die zweite Stufe (Klassifikation) hat zur Aufgabe, zunächst festzustellen, ob es sich bei dem jeweiligen Kandidaten tatsächlich um eine Abbildung eines Verkehrszeichens handelt, und im bejahenden Falle dann den Typ des abgebildeten Verkehrszeichens zu bestimmen. Dies kann beispielsweise mittels eines Template Matching (Maskenvergleich) erfolgen.

Eine derartige Verkehrszeichenerkennung, welche von einer Datenverarbeitungseinrichtung ausgeführt wird, erfordert jedoch einen hohen Rechenaufwand, welcher zu einer hohen Rechenzeit führt. Darüber hinaus ist die Robustheit einer derartigen Verkehrszeichenerkennung unzureichend.

Der Erfindung liegt die Aufgabe zugrunde, eine Möglichkeit anzugeben, den Rechenaufwand bei einer Erkennung von einer Fahrbahn zugeordneten unbewegten Gegenständen zu verkürzen und/oder die Robustheit einer derartigen Erkennung zu erhöhen.

Diese Aufgabe wird durch ein Verfahren der eingangs genannten Art gelöst, bei dem zumindest ein relevanter Raumbereich aus dem Sichtbereich der Kameraeinrichtung bestimmt wird, wobei der zumindest eine relevante Raumbereich möglichen Positionen des Gegenstandes entspricht, die auf Annahmen über die relative Lage des Gegenstandes zu der Fahrbahn und einem vorgegebenen oder ermittelten Fahrbahnverlauf basieren, Begrenzungen der unter Verwendung der Kameraparameter der Kameraeinrichtung berechneten Projektion des zumindest einen relevanten Raumbereichs auf die Bildebene bestimmt werden, um wenigstens einen relevanten Bildbereich zu bestimmen, für ein jedes der Bildelemente in dem wenigstens einen relevanten Bildbereich ein Richtungsstrahl bestimmt wird, der diejenigen Raumpunkte aus dem Sichtbereich umfasst, welche bei einer Projektion auf die Bildebene auf das jeweilige Bildelement projiziert würden, und für ein jedes der Bildelemente in dem wenigstens einen relevanten Bildbereich aus Annahmen über die Größe des Gegenstandes und einem Entfernungsbereich, bei welchem der dem jeweiligen Bildelement zugeordnete Richtungsstrahl den wenigstens einen relevanten Raumbereich schneidet, zumindest ein Wert für die zu erwartende Größe der Abbildung des Gegenstandes bei dem jeweiligen Bildelement bestimmt wird.

Es ist bekannt, in welcher Entfernung und in welcher Höhe relativ zu einer Fahrbahn einer Fahrbahn zugeordnete unbewegte Gegenstände, beispielsweise Verkehrszeichen, Ampelanlagen und dergleichen, aufgestellt werden. Diese Information kann dazu verwendet werden, zusammen mit dem vorgegebenen oder ermittelten Fahrbahnverlauf, einen oder mehrere relevante Raumbereiche in dem Sichtbereich der Kameraeinrichtung zu definieren, in denen derartige unbewegte Gegenstände zu erwarten sind.

Anschließend kann die Projektion des oder der derart festgelegten relevanten 3D-Raumbereiche auf die insbesondere digitale 2D-Bildebene berechnet werden, wobei hierzu die Kameraparameter der Kameraeinrichtung verwendet werden. Bei den Kameraparametern handelt es sich um die extrinsischen und intrinsischen Parameter der Kameraeinrichtung, wobei die extrinsischen Parameter die Position und Orientierung der insbesondere digitalen Kameraeinrichtung im Raum und die intrinsischen Parameter, z.B. Brennweite und optisches Zentrum in der Bildebene, die Projektion an sich beschreiben.

Die Bildebene kann folglich in einen oder mehrere für die Erkennung relevante Bildbereiche, die sich innerhalb der Begrenzungen der berechneten Projektion des oder der relevanten Raumbereiche befinden, und einen oder mehrere übrige Raumbereiche, die sich außerhalb dieser Begrenzungen befinden, eingeteilt werden. Bei einer nachfolgenden Erkennung von beispielsweise Verkehrszeichen, wie sie eingangs beispielhaft beschrieben ist, braucht nur in einem relevanten Bildbereich nach Abbildungen von Verkehrszeichen gesucht zu werden, da in den übrigen Bildbereichen, die den übrigen Raumbereichen entsprechen, in denen keine Verkehrszeichen aufgestellt sind, auch keine Abbildungen von Verkehrszeichen zu erwarten sind. Bereits hierdurch kann die Rechenzeit der nachfolgenden Erkennung reduziert werden. Zudem wird die Robustheit des Gesamtverfahrens erhöht.

Danach werden für ein jedes der Bildelemente, das sich in dem oder den relevanten Bildbereichen befindet, jeweils ein Richtungsstrahl bestimmt, der jeweils die Raumpunkte repräsentiert, die bei einer Projektion auf das jeweilige Bildelement projiziert würden, d.h. die Richtungsstrahlen werden jeweils mittels inverser Projektion des jeweiligen 2D-Bildelements in den 3D-Raum bestimmt.

Aus dem Entfernungsbereich, bei dem ein Richtungsstrahl den oder die relevanten Raumbereiche schneidet, und der Kenntnis über die Größen der Gegenstände, kann dann für ein jedes der Bildelemente in dem oder den relevanten Bildbereichen ein oder mehrere Werte bestimmt werden, wobei jeder Wert eine zu erwartende Größe der Abbildung eines Gegenstandes, der das jeweilige Bildelement umfasst, angibt. Somit kann die Größe des Suchbereichs um das jeweilige Bildelement herum bei einer nachfolgenden Erkennung entsprechend eingeschränkt werden. Hierdurch kann die Rechenzeit einer nachfolgenden Erkennung weiter reduziert und die Robustheit weiter erhöht werden.

Wird ein Bild aufgenommen, kann eine Erkennung von der Fahrbahn zugeordneten unbewegten Gegenständen in dem Bild dann unter Berücksichtigung der vorgenannten Werte durchgeführt werden.

Die vorliegende Erfindung macht sich zu nutze, dass Information über die Positionen und Größen von Fahrbahnen zugeordneten unbewegten Gegenständen bekannt ist. Folglich können aus relevanten Raumbereichen für die Erkennung relevante Bildbereiche, in denen Abbildungen der Gegenstände grundsätzlich vorhanden sein können, bestimmt und die Größen der Gegenstände in den verschiedenen Bereichen der relevanten Bildbereiche vorhergesagt werden. Eine nachfolgende Erkennung kann daher schneller und mit einer höheren Robustheit durchgeführt werden.

Die nachfolgende Erkennung kann weiter dadurch erleichtert werden, dass eine Verfolgung eines der Fahrbahn zugeordneten unbewegten Gegenstandes stattfindet, d.h. beispielsweise ein einmal in einem Bild detektiertes Verkehrszeichen wird, z.B. mittels eines Kalman-Filters, unter Vorhersage der möglichen Positionen der Abbildung des detektierten Verkehrszeichens in dem jeweils nächsten Bild über mehrere Bilder hinweg verfolgt.

Der zumindest eine relevante Raumbereich kann drei Raumbereiche umfassen, wobei sich der erste Raumbereich rechts der Fahrbahn, der zweite Raumbereich links der Fahrbahn und der dritte Raumbereich über der Fahrbahn befinden kann.

Bevorzugt wird aus den Schnittpunkten eines jeden Richtungsstrahls mit den Begrenzungen des wenigsten einen relevanten Raumbereichs jeweils ein minimaler Wert und ein maximaler Wert für die zu erwartende Größe der Abbildung des Gegendstandes bei dem jeweils zugeordneten Bildelement bestimmt. Damit können die Schranken für die Größe des Suchbereichs für die nachfolgende Erkennung nach oben und nach unten festgelegt werden. Bei dem zumindest einen Wert für die zu erwartende Größe der Abbildung des Gegenstandes bei dem jeweiligen Bildelement kann es sich grundsätzlich jedoch auch beispielsweise um einen aus dem jeweiligen minimalen und jeweiligen maximalen Wert berechneten Mittelwert, lediglich den minimalen oder maximalen Wert oder einen sonstigen Wert zwischen dem minimalen und dem maximalen Wert handeln, wobei die Größe des Suchbereichs insbesondere dann mit einer Toleranz für die Größe des Suchbereichs versehen werden kann.

Grundsätzlich ist es möglich, dass das vorgenannte Verfahren im Betrieb, d.h. online und/oder während der Fahrt, durchgeführt wird, beispielsweise dann, wenn der aktuelle Fahrbahnverlauf ermittelt wird, und die Bestimmung des wenigstens einen relevanten Raumbereichs auf dem aktuell ermittelten Fahrbahnverlauf basiert. Bevorzugt wird das vorgenannte Verfahren jedoch für eine Vielzahl von vorgegebenen Fahrbahnverläufen bereits offline und/oder im Vorfeld durchgeführt, wobei für einen jeden der vorgegebenen Fahrbahnverläufe der wenigstens eine relevante Bildbereich und, für ein jedes der Bildelemente in dem relevanten Bildbereich, der zumindest eine Wert für die zu erwartende Größe der Abbildung des Gegenstandes bei dem jeweiligen Bildelement als ein dem vorgegebenen Fahrbahnverlauf zugeordneter Datensatz in einer Datenstruktur bzw. einem Look-up Table gespeichert werden. Wird im Betrieb dann der gleiche oder ein vergleichbarer aktueller Fahrbahnverlauf ermittelt, müssen die Werte für die jeweils zu erwartende Größe der Abbildung des Gegenstandes nicht bestimmt werden, sondern können unter Vermeidung des mit der Bestimmung der Werte verbundenen Rechenzeitaufwands einfach aus der Datenstruktur geladen werden.

Die vorliegende Erfindung betrifft deshalb weiterhin ein Verfahren zur Vorhersage der zu erwartenden Größe der Abbildung eines einer Fahrbahn zugeordneten unbewegten Gegenstandes, insbesondere eines Verkehrszeichens, in einem Bild der Umgebung im Sichtbereich einer insbesondere an einem Kraftfahrzeug angeordneten Kameraeinrichtung, die eine Bildelemente umfassende Bildebene aufweist, bei dem der Fahrbahnverlauf ermittelt wird, und aus einer gespeicherten Datenstruktur ein dem ermittelten Fahrbahnverlauf zugeordneter Datensatz geladen wird, der wenigstens einen relevanten Bildbereich und für ein jedes der Bildelemente in dem wenigstens einen relevanten Bildbereich zumindest einen Wert für die zu erwartende Größe der Abbildung des Gegenstandes bei dem jeweiligen Bildelement umfasst, wobei der Datensatz nach dem vorstehend beschriebenen Verfahren bestimmt wurde.

Bevorzugt enthält die gespeicherte Datenstruktur mehrere Datensätze, die jeweils wenigstens einen relevanten Bildbereich und für ein jedes der Bildelemente in dem wenigstens einen relevanten Bildbereich zumindest einen Wert für die zu erwartende Größe der Abbildung des Gegenstandes bei dem jeweiligen Bildelement umfassen, wobei die Datensätze verschiedenen Fahrbahnverläufen zugeordnet sind. Für einen aktuell ermittelten Fahrbahnverlauf kann dann jeweils derjenige Datensatz aufgerufen werden, dessen zugeordneter Fahrbahnverlauf dem aktuell ermittelten Fahrbahnverlauf am besten entspricht. Beispielsweise kann es ausreichend sein, die Datensätze von insgesamt 15 verschiedenen Fahrbahnverläufen abzuspeichern, wobei ein Fahrbahnverlauf einer geraden Fahrbahn, und sieben Fahrbahnverläufe einer Linkskurve und sieben Fahrbahnverläufe einer Rechtskurve entsprechen, wobei die sieben Fahrbahnverläufe einer jeden Kurvenrichtung sieben verschiedenen Radien entsprechen.

Grundsätzlich kann ein Fahrbahnverlauf zumindest unmittelbar vor der Kameraeinrichtung bzw. dem Kraftfahrzeug in guter Näherung durch einen Kreisbogen beschrieben werden. Daher ist es bevorzugt, wenn zur Ermittlung des Fahrbahnverlaufs der Kurvenradius der Fahrbahn ermittelt wird. Der oder jeder der relevanten Raumbereiche entspricht dann einem gekrümmten Raumbereich, welcher einen konstanten Radius aufweist. Bevorzugt erstreckt sich der relevante Raumbereich lediglich bis zu einer maximalen Entfernung von der Kameraeinrichtung.

Nach einer Ausbildung der Erfindung wird der Kurvenradius der Fahrbahn aus Sensordaten des Kraftfahrzeugs ermittelt. Viele Kraftfahrzeuge sind derzeit bereits mit Sensoren ausgestattet, die es erlauben, einen Kurvenradius zu bestimmen, dem das Kraftfahrzeug momentan folgt, so dass die Bereitstellung der Sensordaten ohne zusätzlichen Aufwand möglich ist. Der mittels der Sensoren detektierte Kurvenradius kann dann zur Beschreibung des Kurvenradius der zumindest unmittelbar vor der Kameraeinrichtung bzw. dem Kraftfahrzeug befindlichen Fahrbahn verwendet werden. Der Radius kann beispielsweise aus der Geschwindigkeit und der Gierrate des Fahrzeugs oder aus einem Lenkeinschlag des Fahrzeugs bestimmt werden.

Grundsätzlich ist es auch möglich, dass der Fahrbahnverlauf, insbesondere der Kurvenradius der Fahrbahn, aus dem Bild selbst und/oder durch Vergleich mehrerer nacheinander aufgenommener Bilder bestimmt wird.

Nach einer weiteren Ausbildung der Erfindung werden Fahrbahnmarkierungen der Fahrbahn detektiert, und wird der Fahrbahnverlauf, insbesondere der Kurvenradius der Fahrbahn, mittels der detektierten Fahrbahnmarkierungen ermittelt. Verfahren zur Detektion von Fahrbahnmarkierungen und zur Ermittlung des Fahrbahnverlaufs aus den Fahrbahnmarkierungen sind grundsätzlich bekannt. Die Fahrbahnmarkierungen ermöglichen, den oder die relevanten Raumbereiche besonders gut zu bestimmen.

Weiterer Gegenstand der Erfindung ist ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Schließlich ist Gegenstand der Erfindung eine Vorrichtung zur Vorhersage der zu erwartenden Größe der Abbildung eines einer Fahrbahn zugeordneten unbewegten Gegenstandes, insbesondere Verkehrszeichens, in einem Bild der Umgebung im Sichtbereich einer insbesondere an einem Kraftfahrzeug angeordneten Kameraeinrichtung, mit einer Datenverarbeitungseinrichtung, die zur Durchführung des vorstehend beschriebenen Verfahrens ausgebildet ist. Bevorzugt ist zusätzlich eine Kameraeinrichtung zur Aufnahme eines Bildes und/oder eine Einrichtung zur Ermittlung eines Fahrbahnverlaufs vorgesehen.

Weitere vorteilhafte Ausführungsformen der Erfindung sind in den Unteransprüchen, der Beschreibung und der Zeichnung angegeben.

Die Erfindung wird im Folgenden beispielhaft unter Bezugnahme auf die Zeichnung beschrieben.

Es zeigen, jeweils in schematischer Darstellung,

Fig. 1    eine Darstellung zur Erläuterung der Bestimmung des Fahr- bahnverlaufs,

Fig. 2    eine Draufsicht auf ein Kraftfahrzeug, wobei ein erster, links einer Fahrbahn befindlicher relevanter Raumbereich und ein zweiter, rechts einer Fahrbahn befindlicher relevanter Raumbereich dargestellt ist,

Fig. 3    eine Querschnittsansicht entlang der Linie A-A in Fig. 1, wo- bei ein über der Fahrbahn befindlicher relevanter Raumbe- reich hinzugefügt ist, und

Fig. 4    ein mittels einer Kameraeinrichtung aufgenommenes Bild, in dem relevante Bildbereiche dargestellt sind.

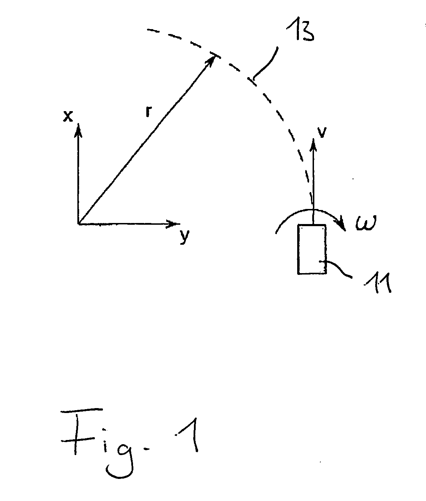

In Fig. 1 ist ein auf einer Fahrbahn fahrendes Kraftfahrzeug 11 in einer Draufsicht dargestellt, an dessen vorderem Ende eine nach vorne gerichtete digitale Videokamera (nicht dargestellt) angebracht ist, um Bilder der Umgebung des Kraftfahrzeugs 11 im Sichtbereich der digitalen Videokamera aufzunehmen. Die Bilder werden dabei auf eine Bildelemente umfassende Bildebene eines Bildsensors der digitalen Videokamera projiziert, um in den Bilder nach Abbildungen von an der Fahrbahn befindlichen Verkehrszeichen zu suchen.

Wie in Fig. 1 dargestellt ist, kann der Kurvenradius r, dem das Kraftfahrzeug 11 zu einem jeweiligen Zeitpunkt folgt, aus der Geschwindigkeit v und der Gierrate ω des Kraftfahrzeugs 11 bestimmt werden, wobei gilt:

$$r = v/\omega.$$

Die Geschwindigkeit v und die Gierrate ω können dabei durch entsprechende Sensoren ermittelt werden. Alternativ kann der Kurvenradius r auch durch einen Lenkwinkelsensor des Kraftfahrzeugs 11 ermittelt werden. Weiterhin ist es auch möglich, dass der Kurvenradius aus den von der digitalen Videokamera aufgenommenen Bildern selbst, beispielsweise durch Detektion der Fahrbahnmarkierungen, ermittelt wird.

Der ermittelte Kurvenradius r wird dazu verwendet, den weiteren Fahrweg 13 des Kraftfahrzeugs 11, welcher in Fig. 1 linksgekrümmt ist, vorherzusagen, wobei der weitere Fahrweg 13 beispielsweise der Mitte der Fahrbahn oder Fahrspur gleichgesetzt wird.

Anschließend wird aus einem Datenspeicher ein dem vorhergesagten weiteren Fahrweg 13 zugeordneter Datensatz geladen, der relevante Bildbereiche, in denen Abbildungen von Verkehrszeichen vorkommen können, und für jedes der Bildelemente in den relevanten Bildbereichen einen minimalen und einen maximalen Wert für die zu erwartende Größe der Abbildung eines Verkehrszeichens bei dem jeweiligen Bildelement umfasst, wobei der Datensatz wie nachfolgend beschrieben bestimmt wurde.

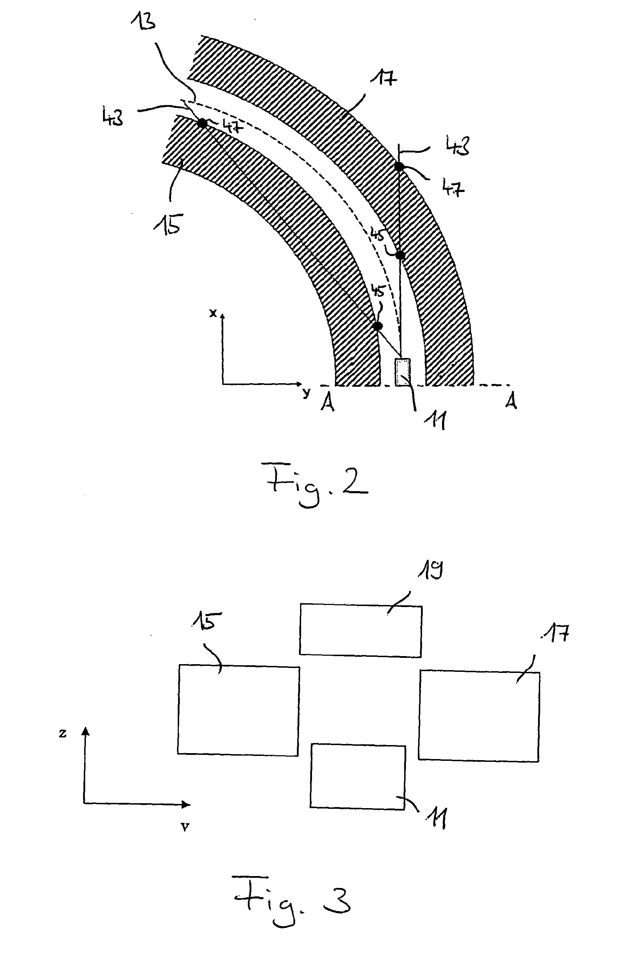

Aus einem Kurvenradius r einer Fahrbahn und dem Wissen über relative Lagen von Verkehrszeichen zu der Fahrbahn oder Fahrspur können relevante imaginäre Raumbereiche, in denen Verkehrszeichen vorkommen können, bestimmt werden. Beispielsweise kann angenommen werden, dass Verkehrszeichen in einer Entfernung von zwischen 0,5 m und 1,5 m von einer Fahrbahn und in einer Höhe von zwischen 1,3 m und 3, 5 m über der Fahrbahnebene aufgestellt werden, oder an sich über die Fahrbahn erstreckenden Brücken, Überführungen und dergleichen in einer Höhe von wenigstens 3,0 m befestigt werden. Derartig beispielhaft bestimmte relevante Raumbereiche sind in den Fig. 2 und 3 gezeigt, wobei in Fig. 2 ein links des Fahrwegs 13 befindlicher relevanter Raumbereich 15 sowie ein rechts des Fahrwegs 13 relevanter Raumbereich 17 und in Fig. 3 zusätzlich ein über der Fahrbahn befindlicher relevanter Raumbereich 19 dargestellt sind. Aus Fig. 2 ist ersichtlich, dass der links des Fahrwegs 13 befindliche relevante Raumbereich 15 eine größere Krümmung und der rechts des Fahrwegs 13 befindliche Raumbereich 17 eine geringere Krümmung aufweist, als der Fahrweg 13 selbst.

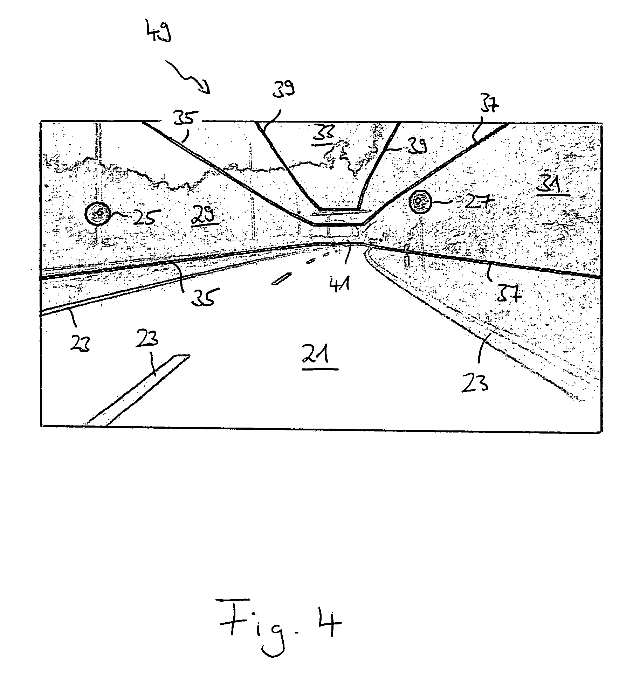

Relevante Raumbereiche, wie sie beispielhaft in den Fig. 2 und 3 dargestellt sind, können nun unter Verwendung der Kameraparameter der Kamera auf die Bildebene der Kamera projiziert werden, wodurch den relevanten Raumbereichen zugeordnete relevante Bildbereiche 29, 31, 33 entstehen, wie in Fig. 4 erkennbar ist. Es sei an dieser Stelle angemerkt, dass die in Fig. 4 dargestellten relevanten Bildbereiche 29, 31, 33 nicht aus der Projektion der in den Fig. 2 und 3 dargestellten relevanten Raumbereich 15, 17, 19 entstanden sind, sondern aus der Projektion von relevanten Raumbereichen, welcher zu einem leicht nach rechts gekrümmten Fahrweg bestimmt wurden. Dabei entspricht der relevante Bildbereich 29 einem links der Fahrbahn befindlichen relevanten Raumbereich, der relevante Bildbereich 31 einem rechts der Fahrbahn befindlichen relevanten Raumbereich, und der relevante Bildbereich 33 einem oberhalb der Fahrbahn befindlichen Raumbereich. Die relevanten Bildbereiche 29, 31, 33 sind dabei von Begrenzungen 35, 37, 39 der relevanten Bildbereich 29, 31, 33 umschlossen. Abbildungen von Verkehrszeichen können nur innerhalb dieser Begrenzungen 35, 37, 39, d.h. in den relevanten Bildbereichen 29, 31, 33, vorkommen.

Ein in Fig. 4 in etwa mittig gelegener Bereich 41 der Bildebene, in dem die beiden relevanten Bildbereich 29, 31 aufeinander zu laufen und welcher einem Raumbereich größerer Entfernung von der Kamera bzw. dem Kraftfahrzeug entspricht, wird nicht als relevanter Bildbereich verwendet, da bei größeren Entfernungen die Abweichungen des tatsächlichen weiteren Fahrbahnverlaufs von dem auf der Grundlage des aktuell gefahrenen Kurvenradius bestimmten Fahrbahnverlaufs zunehmen und Verkehrszeichen für eine zuverlässige Erkennung noch keine ausreichende Größe besitzen.

Nun wird für ein jedes der Bildelemente der Bildebene, die sich innerhalb eines der relevanten Bildbereiche 29, 31, 33 befinden, ein Richtungsstrahl 43 bestimmt, wie nun wieder anhand von Fig. 2 gezeigt ist, wobei der jeweilige Richtungsstrahl 43 jeweils die Raumpunkte aus dem Sichtbereich der Kamera umfasst, welche bei einer Projektion auf das jeweilige Bildelement projiziert würden.

Danach werden die Schnittpunkte 45, 47 eines jeden der Richtungsstrahlen 43 mit den Begrenzungen der relevanten Raumbereiche 15, 17 bestimmt, wobei der erste Schnittpunkt 45 einen minimalen Abstand und der zweite Schnittpunkt 47 einen maximalen Abstand definieren, in dem sich Verkehrszeichen zu der Kamera bzw. dem Kraftfahrzeug befinden können, welche bei dem dem jeweiligen Richtungsstrahl 43 zugeordneten Bildelement erscheinen. Somit werden jedem Bildelement innerhalb der relevanten Bildbereiche 29, 31, 33 ein minimaler und ein maximaler Abstandswert zugewiesen.

Aus dem Wissen über die Größen von Ver-

kehrzeichen und den zuvor bestimmten minimalen und maximalen Entfernungswerten können dann für ein jedes der Bildelemente in den relevanten Bildbereichen 29, 31, 33 ein minimaler und ein maximaler Wert bestimmt werden, die einen Wertebereich für die zu erwartende Größe eines Verkehrzeichens bei dem jeweiligen Bildelement angeben. Weiter außen in der Bildebene liegende Bereiche der relevanten Bildbereichen 29, 31, 33 weisen dabei höhere Werte auf, als weiter innen liegende Bereiche der relevanten Bildbereiche 29, 31, 33, da sie Raumpunkten der relevanten Raumbereiche 15, 17, 19 entsprechen, welche von der digitalen Videokamera bzw. dem Kraftfahrzeug eine größere Entfernung besitzen. Insbesondere nehmen die Werte in einem jeden der relevanten Bildbereiche 29, 31, 33 von innen nach außen kontinuierlich zu.

Das vorstehend beschriebene erfindungsgemäße Verfahren kann für mehrere verschiedene vorgegebene Kurvenradien durchgeführt werden, um für einen jeden der Kurvenradien einen Datensatz an Werten für die zu erwartende Größe der Abbildung eines Verkehrszeichens zu erzeugen. Die vorgenannten Werte können für verschiedene Kurvenradien offline vorberechnet und in einem Look-up Table abgelegt werden. Soll dann eine Verkehrszeichenerkennung durchgeführt werden, muss nur der aktuelle Kurvenradius bestimmt und der zugehörige Datensatz geladen werden.

Beispielhaft ist in Fig. 4 ein von der digitalen Videokamera aufgenommenes Bild 49 der Umgebung im Sichtbereich der digitalen Videokamera gezeigt. In dem Bild 49 sind die Abbildung 21 einer Fahrbahn, die Abbildung 23 von Fahrbahnmarkierungen, die Abbildung 25 eines in Fahrtrichtung gesehen links der Fahrbahn aufgestellten ersten Verkehrszeichens und die Abbildung 27 eines rechts am Fahrbahnrand aufgestellten zweiten Verkehrszeichens zu erkennen, wobei sich die Abbildungen 25, 27 der Verkehrszeichen in den relevanten Bildbereichen 29, 31, 33 befinden. Weitere abgebildete Einzelheiten der Umgebung, d.h. Leitpfosten, Leitplanken, Bäume, Büsche, eine Überführung etc. sind der Übersichtlichkeit halber nur andeutungsweise dargestellt.

Das erfindungsgemäße Verfahren ermöglicht, dass bei einer nachfolgenden Verkehrszeichenerkennung die Suche nach Verkehrszeichen auf die relevanten Bildbereiche eingeschränkt werden kann. In den relevanten Bildbereichen wird die Suche dann dadurch erleichtert, dass für ein jedes der in der relevanten Bildbereichen befindlichen Bildelemente Werte vorhanden sind, die Auskunft über die zu erwartende gesamte Größe einer möglichen Abbildung eines Verkehrszeichens geben, das auf das jeweilige Bildelement und um das jeweilige Bildelement herum befindliche Bildelemente abgebildet wäre.

Grundsätzlich ist es jedoch auch möglich, dass die Bestimmung der vorgenannten Werte während der Fahrt unter Zugrundelegung des jeweiligen aktuell bestimmten Fahrbahnverlaufs vorgenommen wird.

Darüber hinaus kann das vorstehend beschriebene Verfahren nicht nur für eine Verkehrszeichenerkennung, sondern auch für eine Erkennung von anderen einer Fahrbahn zugeordneten unbewegten Gegenständen verwendet werden, beispielsweise von Ampelanlagen.

Bezugszeichenliste

| 11 | Kraftfahrzeug |
|----|----|
| 13 | Fahrweg |
| 15 | relevanter Raumbereich |
| 17 | relevanter Raumbereich |
| 19 | relevanter Raumbereich |
| 21 | Abbildung einer Fahrbahn |
| 23 | Abbildung von Fahrbahnmarkierungen |
| 25 | Abbildung eines Verkehrszeichens |
| 27 | Abbildung eines Verkehrszeichens |
| 29 | relevanter Bildbereich |
| 31 | relevanter Bildbereich |
| 33 | relevanter Bildbereich |
| 35 | Begrenzung des relevanten Bildbereichs 29 |
| 37 | Begrenzung des relevanten Bildbereichs 31 |
| 39 | Begrenzung des relevanten Bildbereichs 33 |
| 41 | weiterer Bildbereich |
| 43 | Richtungsstrahl |
| 45 | Schnittpunkt |
| 47 | Schnittpunkt |
| 49 | Bild |
| | |
| r | Kurvenradius |
| v | Geschwindigkeit |
| ω | Gierrate |

**Patentansprüche**

1. Verfahren zur Vorhersage der zu erwartenden Größe der Abbildung (25, 27) eines einer Fahrbahn zugeordneten unbewegten Gegenstandes, insbesondere Verkehrszeichens, in einem Bild (49) der Umgebung im Sichtbereich einer insbesondere an einem Kraftfahrzeug angeordneten Kameraeinrichtung, die eine Bildelemente umfassende Bildebene aufweist, bei dem

zumindest ein relevanter Raumbereich (15, 17, 19) aus dem Sichtbereich der Kameraeinrichtung bestimmt wird, wobei der zumindest eine relevante Raumbereich (15, 17, 19) möglichen Positionen des Gegenstandes entspricht, die auf Annahmen über die relative Lage des Gegenstandes zu der Fahrbahn und einem vorgegebenen oder ermittelten Fahrbahnverlauf (13) basieren,

Begrenzungen (35, 37, 39) der unter Verwendung der Kameraparameter der Kameraeinrichtung berechneten Projektion des zumindest einen relevanten Raumbereichs (15, 17, 19) auf die Bildebene bestimmt werden, um wenigstens einen relevanten Bildbereich (29, 31, 33) zu bestimmen,

für ein jedes der Bildelemente in dem wenigstens einen relevanten Bildbereich (29, 31, 33) ein Richtungsstrahl (43) bestimmt wird, der diejenigen Raumpunkte aus dem Sichtbereich umfasst, welche bei einer Projektion auf die Bildebene auf das jeweilige Bildelement projiziert würden, und

für ein jedes der Bildelemente in dem wenigstens einen relevanten Bildbereich (29, 31, 33) aus Annahmen über die Größe des Gegenstandes und einem Entfernungsbereich, bei welchem der dem jeweiligen Bildelement zugeordnete Richtungsstrahl (43) den wenigstens einen relevanten Raumbereich (15, 17, 19) schneidet, zumindest ein Wert für die zu erwartende Größe der Abbildung (25, 27) des Gegenstandes bei dem jeweiligen Bildelement bestimmt wird.

2. Verfahren nach Anspruch 1,
   **dadurch gekennzeichnet,**
   **dass** aus den Schnittpunkten (45, 47) eines jeden Richtungsstrahls (43) mit den Begrenzungen des wenigstens einen relevanten Raumbereichs (15, 17, 19) jeweils ein minimaler Wert und ein maximaler Wert für die zu erwartende Größe der Abbildung des Gegenstandes bei dem jeweils zugeordneten Bildelement bestimmt wird.

3. Verfahren zur Vorhersage der zu erwartenden Größe der Abbildung (25, 27) eines einer Fahrbahn zugeordneten unbewegten Gegenstandes, insbesondere Verkehrszeichens, in einem Bild (49) der Umgebung im Sichtbereich einer insbesondere an einem Kraftfahrzeug angeordneten Kameraeinrichtung, die eine Bildelemente umfassende Bildebene aufweist, bei dem

   der Fahrbahnverlauf (13) ermittelt wird, und

   aus einer gespeicherten Datenstruktur ein dem ermittelten Fahrbahnverlauf (13) zugeordneter Datensatz geladen wird, der wenigstens einen relevanten Bildbereich (29, 31, 33) und für ein jedes der Bildelemente in dem wenigstens einen relevanten Bildbereich (29, 31, 33) zumindest einen Wert für die zu erwartende Größe der Abbildung (25, 27) des Gegenstandes bei dem jeweiligen Bildelement umfasst, wobei der Datensatz nach dem Verfahren nach einem der vorstehenden Ansprüche bestimmt wurde.

4. Verfahren nach Anspruch 3,
   **dadurch gekennzeichnet,**
   **dass** die gespeicherte Datenstruktur mehrere Datensätze enthält, die jeweils wenigstens einen relevanten Bildbereich (29, 31, 33) und für ein jedes der Bildelemente in dem wenigstens einen relevanten Bildbereich (29, 31, 33) zumindest einen Wert für die zu erwartende Größe der Abbildung (25, 27) des Gegenstandes bei dem jeweiligen Bildelement umfassen, wobei die Datensätze verschiedenen Fahrbahnverläufen (13) zugeordnet sind.

5. Verfahren nach einem der vorstehenden Ansprüche,
   **dadurch gekennzeichnet,**
   **dass** zur Ermittlung des Fahrbahnverlaufs (13) der Kurvenradius (r) der Fahrbahn ermittelt wird.

6. Verfahren nach Anspruch 5,
   **dadurch gekennzeichnet,**
   **dass** der Kurvenradius (r) der Fahrbahn aus Sensordaten des Kraftfahrzeugs, insbesondere aus der Geschwindigkeit (v) und der Gierrate ($\omega$), ermittelt wird.

7. Verfahren nach einem der vorstehenden Ansprüche,
   **dadurch gekennzeichnet,**
   **dass** mittels der Kameraeinrichtung wenigstens ein Bild (49) aufgenommen wird, wobei das wenigstens eine Bild zur Ermittlung des Fahrbahnverlaufs (13) verwendet wird.

8. Verfahren nach einem der vorstehenden Ansprüche,
   **dadurch gekennzeichnet,**
   **dass** Fahrbahnmarkierungen der Fahrbahn detektiert werden, und der Fahrbahnverlauf (13), insbesondere der Kurvenradius (r) der Fahrbahn, mittels der detektierten Fahrbahnmarkierungen ermittelt wird.

9. Computerprogramm mit Programmcodemitteln zur Durchführung des Verfahrens nach einem der Ansprüche 1 bis 8, wenn das Computerprogramm auf einem Computer oder einer entsprechenden Recheneinheit ausgeführt wird.

10. Computerprogrammprodukt mit Programmcodemitteln, die auf einem computerlesbaren Datenträger gespeichert sind, zur Durchführung des Verfahrens nach einem der Ansprüche 1 bis 8, wenn das Computerprogramm auf einem Computer oder einer entsprechenden Recheneinheit ausgeführt wird.

11. Vorrichtung zur Vorhersage der zu erwartenden Größe der Abbildung (25, 27) eines einer Fahrbahn zugeordneten unbewegten Gegenstandes, insbesondere Verkehrszeichens, in einem Bild (49) der Umgebung im Sichtbereich einer insbesondere an einem Kraftfahrzeug angeordneten Kameraeinrichtung, mit einer Datenverarbeitungseinrichtung, die zur Durchführung des Verfahrens nach einem der Ansprüche 1 bis 8 ausgebildet ist.

12. Vorrichtung nach Anspruch 11,
   **dadurch gekennzeichnet,**
   **dass** eine Kameraeinrichtung zur Aufnahme eines Bildes (49) und/oder eine Einrichtung zur Ermittlung eines Fahrbahnverlaufs (13) vorgesehen ist.

Fig. 1

Fig. 2

Fig. 3

Fig. 4

**Europäisches Patentamt**

**EUROPÄISCHER RECHERCHENBERICHT**

Nummer der Anmeldung

EP 07 01 4924

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | UWE-PHILIPP KÄPPELER: "Erkennung und Verfolgung von Leitpfosten zur Spurprädiktion" 30. September 2003 (2003-09-30), UNIVERSITÄT STUTTGART 2073 , XP002461061 Abschnitt 2.4 Abschnitt 3.1 Abschnitt 3.6.1 Abschnitt 5.3 Abschnitt 5.4 Kapitel 6 Kapitel 7 Anhang A | 1-12 | INV. G06K9/00 |
| X | & SMUDA VON TRZEBIATOWSKI M ET AL: "Detecting reflection posts - lane recognition on country roads" INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 304-309, XP010727486 ISBN: 0-7803-8310-9 ----- | 1-12 | |
| X | JP 11 203458 A (NISSAN MOTOR) 30. Juli 1999 (1999-07-30) * Absatz [0023] - Absatz [0058]; Abbildungen 1-23 * ----- | 1-5,7, 9-12 | RECHERCHIERTE SACHGEBIETE (IPC)  G06K G08G B60R B60K |
| X | US 2005/232469 A1 (SCHOFIELD KENNETH [US] ET AL) 20. Oktober 2005 (2005-10-20) * Absätze [0007] - [0009], [0061], [0062], [0064], [0068] - [0070], [0072], [0119], [0132] * ----- -/-- | 1,2,5, 7-12 | |

Der vorliegende Recherchenbericht wurde für alle Patentansprüche erstellt

| Recherchenort | Abschlußdatum der Recherche | Prüfer |
|---|---|---|
| Den Haag | 7. Dezember 2007 | Alecu, Teodor Iulian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**
**Patentamt**

## EUROPÄISCHER RECHERCHENBERICHT

Nummer der Anmeldung

EP 07 01 4924

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/093857 A (DONNELLY CORP [US]) 13. November 2003 (2003-11-13)<br>* Zusammenfassung; Abbildungen 1-13 *<br>* Seite 3, Zeile 17 - Seite 4, Zeile 4 *<br>* Seite 5, Zeilen 5-20 *<br>* Seite 7, Zeilen 28-33 *<br>* Seite 8, Zeilen 1-5 *<br>* Seite 14, Zeile 9 - Seite 26, Zeile 22 *<br>* Seite 27, Zeilen 28-34 *<br>* Seite 28, Zeilen 1-16 *<br>* Seite 29, Zeile 18 - Seite 30, Zeile 19 *<br>* Seite 33, Zeile 26 - Zeile 34 *<br>* Seite 39, Zeile 17 - Seite 40, Zeile 14 *<br><br>----- | 3-5,7-12 | |
| X | BARNES N ET AL: "Real-time radial symmetry for speed sign detection" INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 566-571, XP010727709 ISBN: 0-7803-8310-9<br>* Seite 567 - Seite 568 *<br><br>----- | 1,2,5,6,<br>9-12 | **RECHERCHIERTE SACHGEBIETE (IPC)** |
| X | EP 1 327 969 A (AUDI NSU AUTO UNION AG [DE]) 16. Juli 2003 (2003-07-16)<br>* Absätze [0007] - [0010], [0019] - [0022] *<br><br>-----<br><br>-/-- | 3,4,7,<br>9-12 | |

Der vorliegende Recherchenbericht wurde für alle Patentansprüche erstellt

| Recherchenort | Abschlußdatum der Recherche | Prüfer |
|---|---|---|
| Den Haag | 7. Dezember 2007 | Alecu, Teodor Iulian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**Europäisches Patentamt**    **EUROPÄISCHER RECHERCHENBERICHT**

Nummer der Anmeldung

EP 07 01 4924

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PICCIOLI G ET AL: "Robust method for road sign detection and recognition" IMAGE AND VISION COMPUTING, GUILDFORD, GB, Bd. 14, Nr. 3, April 1996 (1996-04), Seiten 209-223, XP002252733 ISSN: 0262-8856 Abschnitt 2 Abschnitt 3.1.1 Abschnitt 4.2 * Abbildungen 1,11 * | 1,2,7, 9-12 | |
| A | JOHANSSON B: "Road Sign Recognition from a Moving Vehicle" INTERNET CITATION, [Online] 2002, XP002456538 Gefunden im Internet: URL:ftp://ftp.csd.uu.se/pub/papers/masters -theses/0236-johansson.pdf> [gefunden am 2007-10-25] * das ganze Dokument * | 1-12 | |
| A | "The Road Sign Recognition System - RS2" INTERNET CITATION, [Online] 2000, XP002135353 Gefunden im Internet: URL:http://euler.fd.cvut.cz/research/rs2/r s2algorithm.html> [gefunden am 2000-04-11] * das ganze Dokument * | 1-12 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 7. Dezember 2007 | Alecu, Teodor Iulian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 4924

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2007

| Im Recherchenbericht angeführtes Patentdokument | Datum der Veröffentlichung | Mitglied(er) der Patentfamilie | Datum der Veröffentlichung |
|---|---|---|---|
| JP 11203458 A | 30-07-1999 | KEINE | |
| US 2005232469 A1 | 20-10-2005 | KEINE | |
| WO 03093857 A | 13-11-2003 | AU 2003225228 A1<br>EP 1504276 A2 | 17-11-2003<br>09-02-2005 |
| EP 1327969 A | 16-07-2003 | DE 10200784 A1 | 31-07-2003 |

EPO FORM P0461

Für nähere Einzelheiten zu diesem Anhang : siehe Amtsblatt des Europäischen Patentamts, Nr.12/82